Europäisches Patentamt

European Patent Office

Office européen des brevets

(19)

(11) Publication number: **0 070 592**
**B1**

(12) **EUROPEAN PATENT SPECIFICATION**

(45) Date of publication of patent specification: **12.03.86**

(51) Int. Cl.⁴: **C 02 F 3/30**

(21) Application number: **82200862.9**

(22) Date of filing: **09.07.82**

(54) Process for the biological purification of waste water.

(30) Priority: **16.07.81 NL 8103372**

(43) Date of publication of application:
**26.01.83 Bulletin 83/04**

(45) Publication of the grant of the patent:
**12.03.86 Bulletin 86/11**

(84) Designated Contracting States:
**AT BE CH DE FR GB IT LI NL SE**

(56) References cited:
**DE-A-2 852 544**
**US-A-4 153 544**
**US-A-4 183 810**

(73) Proprietor: **STAMICARBON B.V.**
**Postbus 10**
**NL-6160 MC Geleen (NL)**

(72) Inventor: **Berends, Jan**
**Lynestraat 12**
**NL-6135 EB Sittard (NL)**

(74) Representative: **Hatzmann, Marinus Jan et al**
**OCTROOIBUREAU DSM P.O.Box 9**
**NL-6160 MA Geleen (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

# 0 070 592

**Description**

The invention relates to a process for the biological purification of waste water whereby dissolved organic and nitrogen compounds are at least partly removed from the waste water, by passing the optionally pre-purified waste water through an aerobic nitrification phase and an anaerobic denitrification phase.

The composition of waste water presented to a biological treatment plant is liable to variations. These variations require adjustments of, for instance, the quantity of oxygen required for oxidation of the polluting compounds. From the French patent application No. 2401101 laid open to public inspection it is known that these adjustments can be made on the basis of the measurements of the oxygen concentration at a suitable place in the purification process. It is also known that the supply of oxygen can be controlled on the basis of the chemical oxygen demand (COD) in the effluent of a biological treatment plant (French patent application No. 2400489 laid open to public inspection). It is further known that the supply of oxygen can be regulated by means of the quantity of waste water presented.

These methods will have the disadvantage that the amount of oxygen supplied for the purification is only indirectly related to the conditions prevailing at the places where the oxidation reactions occur. This situation may result in an unnecessary high oxygen comsumption, or alternatively in too low a degree of purification, as there need not be a direct connection between the parameter measured and the actual situation in the purification process.

Unnecessarily high consumption of oxygen means an unnecessarily high energy consumption, whereas a too low a degree of purification results a too large a content of impurities in the effluent.

The object of the invention is to provide a process in which a high degree of purification is reached with a minimum consumption of energy for the aeration.

According to the invention this is achieved in that the molecular oxygen concentration in the aerobic phase is regulated at least in part in dependence of the $NO_x$—N concentration, $NO_x$—N being understood to mean the nitrogen present in the waste water in the form of nitrite and/or nitrate ions, determined according to industrial method 33—69 W as described in Technicon (R) Auto Analyser methodology.

If in the treatment of waste water aerobic and anaerobic zones or periods are applied, the supply of oxygen can be regulated in dependence of the oxygen concentration in the aerobic zone. This parameter, however, does not indicate whether enough nitrate is formed to keep alive the bacteria converting the nitrate into nitrogen and oxygen in the anaerobic phase. The formation of nitrate is, on the one side, an indication of the proper progress of the oxidation reactions in the aerobic phase and, on the other, a condition for the activity of the bacteria in the anaerobic phase. By identifying and maintaining what is deemed to be the minimum concentration of nitrate required and by adjusting the supply of oxygen thereto an optimum dosage of oxygen is achieved with which an optimum energy consumption and purification efficiency are approached.

This method of regulating the supply of oxygen can be applied only if in the treatment of waste water in aerobic and anaerobic phases nitrate is formed from the nitrogen compounds present in the supply or if nitrate is present in the waste water supplied. The ratio between the chemical oxygen demand (COD) and the nitrogen compounds in the waste water is preferably higher than 5. In order to be sure that there will be a minimum aerobic phase in which the desired oxidation reactions, such as nitrification, take place, which reactions do take place in the presence of oxygen, but not in the presence of nitrate, it is important for the COD/N ratio to be higher than 5. This is mostly the case in domestic and in industrial waste water streams. If said ratio is lower than 5, more nitrate may be present, or be formed during the treatment of the waste water, than can be utilized for the oxidation of the COD in the anaerobic zone. In consequence, after the purification the effluent may still contain too much $NH_3$—N. If the waste water does not of its own contain enough organic matter as pollutants, it may be an advantage to add an organic waste stream, for instance a solution of carboxylic acids, to the waste water in order to take care that enough oxygen acceptor is present to reduce the $NO_x$ to molecular nitrogen. Another condition for an efficient purification of said types of waste water is the presence of a sufficient quantity of activated sludge. To this end preference is given to choosing a COD-sludge load of between 0.1 and 0.5 g COG/g sludge.day.

The present waste waster treatment can be effected in a continuous as well as in a discontinuous process. In the event of a continuous treatment the waste water successively passes through zones with aerobic and anaerobic conditions. The order in which the waste water passes through these zones depends on the process chosen.

In the present process, in the application of which the waste water successively passes through aerobic and anaerobic phases, it is important economically and from the point of view of processing technique not to maintain aerobic conditions if there is no need of oxygen, or not to maintain anaerobic conditions if no $NO_x$—N is available. It has been found that the residence times in said zones can be controlled by regulating the supply of oxygen in dependence of the $NO_x$—N concentration. The oxygen concentration can at first be regulated in the conventional way by means of the oxygen concentration in the aerobic zone. By varying the oxygen concentration, the length of time during which aerobic and anaerobic conditions prevail can be changed. This length of time can be regulated also by maintaining a constant oxygen concentration over a shorter or longer range. These changes in the length of time are regulated according to the invention in dependence of the $NO_x$—N concentration by having at least part of the supply of oxygen commanded by

2

this parameter. The effect of this will be, on the one side, that the quantity of oxygen supplied will not be too large and, on the other, that enough oxygen and $NO_x$—N will be present for an active bacterial life during the aerobic and anaerobic phases. To this end the measured value is set so that maximum use is made of the $NO_x$-oxygen and the bacterial activity is not inhibited. To this end the $NO_x$—N concentration is preferably kept between 1 mg/l and 50 mg/l.

There is freedom of choice as to the place where the $NO_x$—N concentration is measured. This can be done, for instance, in the aerobic zone, the anaerobic zone or the effluent of the installation. Preference is given to a measuring point having a high $NO_x$—N concentration in order to minimize the consequences of inaccuracies in measuring, for instance in the transition region between the aerobic and anaerobic zone.

A method that can be used to measure the $NO_x$—N is described in the Dutch patent application 7705427 laid open to public inspection.

The present invention is based on the principle that a biological waste water treatment plant can be controlled by means of the $NO_x$—N concentration. By means of a few simple experiments the person skilled in the art can determine which of the known control systems can be used for this purpose. A suitable possibility is formed by the control at limiting values, in which the aeration is started wholly or partly when the $NO_x$—N concentration falls below a fixed limit, whereas the aeration is stopped when an (other) upper limit is exceeded.

In addition, it is possible also to control via a proportional control.

From the German patent application No. 2852544 it is known that activated sludge from a waste water plant can be stabilised by oxygenation, which oxygenation is stopped if a certain level of nitrite is reached to prevent the inhibition of the process. This application is not directed to the purification of waste water but only to the further processing of the sludge produced during a purification process.

Example I

To a reactor having a capacity of 10 l and an activated sludge concentration of 4—6 g/l, a quantity of about 7 l/day waste water was supplied containing 670—1020 mg COD/l, and 70—95 mg $NH_4^+$—8N/l. From the effluent of the reactor the sludge was separated off in a final settling tank, in which process the sludge was recycled into the reactor. The reactor was aerated intermittently by means of compressed air supplied through a porous pipe at the bottom of the reactor. The aeration time and the aeration frequency were set by means of a clock. The compressed air flow during the aeration was controlled by means of a needle valve controlled via a control system by a signal coming from an electrode specially suitable for identifying the nitrate content. This electrode determined the nitrate content in the effluent of the settling tank. The following results were obtained, as weekly averages, from a long-duration test.

| | |
|---|---|
| Cycle time (time between the start of two successive aeration periods) | 75 sec |
| aeration time | 10 sec |
| set-point $NO_3^-$—N concentration | .3 mg/l |
| effluent concentrations COD | 53 mg/l |
| $NH_4^+$—N | 6 mg/l |
| $(NO_2^- + NO_3^-)$—N | 4 mg/l |
| total N | 10 mg/l |
| N removal efficiency | 87% |

Example II

Analogous to example I an experiment was made in a so-called carousel-activated type of waste water treatment plant.

The results were as follows:

| | |
|---|---|
| Cycle time (time between the start of two successive aeration periods) | 360 sec |
| aeration time | 30 sec |
| set-point $NO_3^-$—N concentration | 4 mg/l |
| effluent concentrations COD | 60 mg/l |
| $NH_4^+$—N | 10 mg/l |
| $(NO_2^- + NO_3^-)$—N | 5 mg/l |
| total N | 15 mg/l |
| N removal efficiency | 83% |

Example III

The test rig consisted of an aerated mixed reactor having a capacity of 4 l, a pump having a variable delivery rate (to 1100 l/h) and 20 m plastic hose having a capacity of 10 l. By means of the pump an activated sludge suspension having a sludge concentration of 4 or 5 g/l was pumped round through the reactor and the hose. To the test rig about 10 l/h waste water was supplied. The effluent was carried off via a final settling tank. The settled sludge was returned to the reactor. The aeration in the reactor was effected with compressed air supplied through a porous pipe at the bottom of the reactor. The suspension supplied to the hose is therefore aerobic, while the oxygen concentration of the suspension when leaving the hose is nil. The compressed air flow for the aeration in the reactor was regulated on the basis of a nitrate measurement in the effluent of the final settling tank. The results mentioned hereinafter were achieved as weekly averages in a long-duration test. The rate of flow at which the suspension was pumped round through the test rig was 683 l/h, corresponding with a circulating time of about 75 sec. The composition of the supply (about 10 l/h) was:

COD 800—1000 mg/l, $NH_4^+$—N 80—100 mg/l, $NO_3^-$—N less than 10 mg/l; set-point $NO_3^-$—N 10 mg/l;
The composition of the effluent was:
COD 58 mg/l, $NH_4^+$—N 16 mg/l, $NO_3^-$—N 7 mg/l.
The N removal efficiency was 75%.

The examples show that by applying the control system described, an N removal efficiency of 75% and higher can be achieved. If the supply of oxygen is controlled on the basis of the oxygen concentration in the aerobic period/zone, either incomplete nitrification will occur or more or less $NO_3^-$—N will be found in the effluent, depending of what happens to be the COD load. In that case the average total N removal efficiency will not be more than 30%, mainly in consequence of $NH_4^+$—N absorption in the activated sludge.

**Claims**

1. Process for the biological purification of waste water, whereby dissolved organic and nitrogen compounds are at least partly removed from the waste water, by passing the optionally prepurified waste water through an aerobic nitrification phase and an anaerobic denitrification phase, characterized in that the molecular oxygen concentration in the aerobic phase is controlled at least in part by means of the $NO_x$—N concentration, $NO_x$—N being understood to mean the nitrogen present in the waste water in the form of nitrite and/or nitrate ions, determined according to industrial method 33—69 W as described in Technicon (R) Auto Analyser methodology.

2. Process according to claim 1, characterized in that the waste water is aerated intermittently.

3. Process according to claim 1, characterized in that the waste water is passed continuously in one reactor space through successively an aerobic and an anaerobic zone.

4. Process according to claim 3, characterized in that the residence time of the waste water in the aerobic zone is regulated in dependence of the $NO_x$—N concentration.

5. Process according to one or more of claims 1—4, characterized in that the waste water to be treated has a ratio between the chemical oxygen demand (COD) and the nitrogen present which is higher than 5.

6. Process according to one or more of claims 1—5, characterized in that the chosen COD-sludge load is between 0.1 and 0.5 gCOD/g sludge. day.

7. Process according to one or more of claims 1—6, characterized in that the $NO_x$—N concentration is at least 1 mg/l and at most 50 mg/l.

**Patentansprüche**

1. Verfahren für die biologische Reinigung von Abwasser, wobei gelöste organische und Stickstoffverbindungen zumindest teilweise aus dem Abwasser entfernt werden, indem das wahlweise vorgereinigte

**0 070 592**

Abwasser durch eine aerobe Nitrifikationsphase und eine anaerobe Denitrifikationsphase geführt wird, dadurch gekennzeichnet, daß die molekulare Sauerstoffkonzentration in der aeroben Phase zumindest teilweise durch die $NO_x$—N-Konzentration geregelt wird, wobei unter $NO_x$—N der in Form von Nitrit- und/oder Nitrat-Ionen im Abwasser vorhandene Stickstoff zu verstehen ist, der gemäß dem technischen Verfahren 33—69 W, wie in Technicon (R) Auto Analyser methodology beschrieben, bestimmt wird.

2. Verfahren nach Anspruch 1, dadurch gekennzeichnet, daß das Abwasser zeitweise belüftet wird.

3. Verfahren nach Anspruch 1, dadurch gekennzeichnet, daß das Abwasser kontinuierlich in einem Reaktorraum nacheinander durch eine aerobe und eine anaerobe Zone geführt wird.

4. Verfahren nach Anspruch 3, dadurch gekennzeichnet, daß die Verweilzeit des Abwassers in der aeroben Zone in Abhängigkeit von der $NO_x$—N-Konzentration geregelt wird.

5. Verfahren nach einem oder mehreren der Ansprüche 1 bis 4, dadurch gekennzeichnet, daß das zu behandelnde Abwasser ein Verhältnis zwischen dem chemischen Sauerstoffbedarf (CSB) und dem vorhandenen Stickstoff aufweist, das höher als 5 ist.

6. Verfahren nach einem oder mehreren der Ansprüche 1 bis 5, dadurch gekennzeichnet, daß die gewählt CSB-Schlammbelastung zwischen 0,1 und 0,5 g CSB/g Schlamm. Tag beträgt.

7. Verfahren nach einem oder mehreren der Ansprüche 1 bis 6, dadurch gekennzeichnet, daß die $NO_x$—N-Konzentration mindestens 1 mg/l und höchstens 50 mg/l beträgt.

**Revendications**

1. Procédé de purification biologique de l'eau usée, dans lequel des composés organiques et d'azote dissous sont au moins partiellement enlevés de l'eau usée, en faisant passer l'eau usée facultativement prépurifiée à travers une phase de nitrification aérobie et une phase de dénitrification anaérobie, caractérisé en ce qu'on règle la concentration d'oxygène moléculaire dans la phase aérobie au moins partiellement au moyen de la concentration de $NO_x$—N, ce paramètre $NO_x$—N désignant l'azote présent dans l'eau usée sous forme d'ions nitrite et/ou nitrate, qu'on détermine selon le procédé industriel 33—69 W décrit dans Technicon (R) Auto Analyser methodology.

2. Procédé selon la revendication 1, caractérisé en ce qu'on aère de façon intermittente l'eau usée.

3. Procédé selon la revendication 1, caractérisé en ce qu'on fait passer l'eau usée continuellement dans un espace de réacteur à travers successivement une zone aérobie et une zone anaérobie.

4. Procédé selon la revendication 3, caractérisé en ce que la durée de séjour de l'eau usée dans la zone aérobie est réglée en fonction de la concentration de $NO_x$—N.

5. Procédé selon l'une quelconque des revendications 1 à 4, caractérisé en ce que l'eau usée à traiter présente un rapport entre la demande en oxygène chimique (DOC) et l'azote présent qui est supérieur à 5.

6. Procédé selon l'une quelconque des revendications 1 à 5, caractérisé en ce que la charge choisie DOC-boue est de 0,1 à 0,5 g de DOC/g de boue par jour.

7. Procédé selon l'une quelconque des revendications 1 à 6, caractérisé en ce que la concentration de $NO_x$—N est d'au moins 1 mg/l et au plus de 50 mg/l.